# EUROPÄISCHE PATENTSCHRIFT

(11) **EP 2 386 734 B1**
(45) Veröffentlichungstag und Bekanntmachung des Hinweises auf die Patenterteilung: **21.03.2018**
(21) Anmeldenummer: 11164958.8
(22) Anmeldetag: 05.05.2011
(51) Int. Cl.: F01N 1/02, F01N 1/16, B60K 13/04, B60K 13/06

(54) **Abgasanlage und zugehörige Tragstruktur**
Exhaust system and support structure therefore
Système d'échappement et structure de support d'un tel système

(30) Priorität: 11.05.2010 DE 102010020033
(43) Veröffentlichungstag der Anmeldung: 16.11.2011
(73) Patentinhaber: Eberspächer Exhaust Technology GmbH & Co. KG, 66539 Neunkirchen (DE)
(72) Erfinder: Wirth, Georg, 73230, Kirchheim/Teck (DE); Jebasinski, Rolf, 70794, Filderstadt (DE)
(74) Vertreter: BRP Renaud & Partner mbB Rechtsanwälte Patentanwälte Steuerberater

(56) Entgegenhaltungen:
- EP-A1- 1 498 584
- WO-A1-2009/079402
- DE-A1-102004 007 717
- JP-A- S6 030 463
- JP-U- H0 457 617
- US-A- 5 388 408
- US-A1- 2002 022 416
- US-A1- 2005 230 182

## Beschreibung

Die vorliegende Erfindung betrifft eine Abgasanlage einer Brennkraftmaschine in einer Tragstruktur, z. Bsp. in einem Kraftfahrzeug. Die Erfindung betrifft außerdem eine Tragstruktur, insbesondere ein Kraftfahrzeug, mit einer Brennkraftmaschine und mit einer derartigen Abgasanlage.

Üblicherweise umfasst eine Abgasanlage zumindest ein Abgasrohr, das Abgas von der Brennkraftmaschine zur Umgebung der jeweiligen Tragstruktur führt. Zur Bedämpfung der Schallemission weist eine Abgasanlage üblicherweise zumindest einen Schalldämpfer auf, der zumindest ein Resonanzvolumen und wenigstens eine Verbindungsleitung aufweisen kann, über welche das jeweilige Resonanzvolumen zur Luftschallübertragung an das jeweilige Abgasrohr angeschlossen ist.

Bei üblicher Bauweise umfasst der Schalldämpfer ein Schalldämpfergehäuse, in dem besagtes Resonanzvolumen ausgebildet ist. Über einen Einlass und einen Auslass ist das Gehäuse dann in das Abgasrohr der Abgasanlage eingebunden. Im Inneren des Schalldämpfergehäuses verbindet dann zumindest eine solche Verbindungsleitung das Resonanzvolumen mit dem vom Einlass zum Auslass führenden Abgaspfad.

Problematisch bei dieser konventionellen Bauweise ist, dass häufig vergleichsweise große Resonanzvolumina erforderlich sind, bspw. um tief frequenten Störschall zu bedämpfen. Dementsprechend bauen die Schalldämpfergehäuse vergleichsweise groß und besitzen eine entsprechend große Maße. Problematisch ist dabei außerdem die Unterbringung derartiger, großvolumiger Schalldämpfer an der jeweiligen Tragstruktur, zumindest dann, wenn es sich dabei um ein Kraftfahrzeug handelt. Ferner ist von US 2005/0230182 A1 eine Abgasanlage einer Brennkraftmaschine bekannt, die ein Resonanzvolumen aufweist, der über eine Verbindungsleitung an ein Abgasrohr verbunden ist.

Die vorliegende Erfindung beschäftigt sich mit dem Problem, für eine Abgasanlage bzw. für eine damit ausgestattete Tragstruktur eine verbesserte Ausführungsform anzugeben, die sich insbesondere dadurch auszeichnet, dass die Abgasanlage vergleichsweise wenig Gewicht besitzt und/oder vergleichsweise wenig Einbauraum benötigt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zumindest ein solches Resonanzvolumen nicht in einem Schalldämpfergehäuse, sondern in einer Resonanzkammer auszubilden, die in oder an der Tragstruktur fest angeordnet ist. Die zugehörige Verbindungsleitung ist dann derart flexibel ausgestaltet, dass sie Relativbewegungen zwischen der Resonanzkammer und dem Abgasrohr zulässt. Mit anderen Worten, die das Resonanzvolumen enthaltende Resonanzkammer ist baulich von der im Übrigen konventionellen Abgasanlage entkoppelt und stattdessen an bzw. in der Tragstruktur angeordnet bzw. ausgebildet. Zum einen reduziert sich dadurch das Gewicht der Abgasanlage, da bspw. auf ein schweres Schalldämpfergehäuse, das in das Abgasrohr eingebunden ist, verzichtet werden kann. Zum anderen entfällt ein großvolumiges Schalldämpfergehäuse, so dass das Abgasrohr und letztlich die Abgasanlage weniger Einbauraum benötigt. Ein weiterer besonderer Vorteil des erfindungsgemäßen Vorschlags wird darin gesehen, dass in der Tragstruktur, insbesondere im Kraftfahrzeug, ohnehin vorhandene Hohlräume genutzt werden können, um die Resonanzkammer auszubilden bzw. unterzubringen. Die flexible Verbindungsleitung bewirkt gleichzeitig eine Schwingungsentkopplung zwischen Resonanzkammer und Abgasrohr. Somit kann sich die jeweilige Resonanzkammer mit der Tragstruktur bewegen, während sich das Abgasrohr relativ zur Tragstruktur bewegen kann, insbesondere aufgrund von Schwingungen. Besonders vorteilhaft ist außerdem der Umstand, dass sich die Aufhängung des Abgasrohrs an der Tragstruktur erheblich vereinfacht, da die große Masse eines das Resonanzvolumen beinhaltenden Schalldämpfergehäuses entfallen kann.

Entsprechend einer vorteilhaften Ausführungsform kann zumindest eine Resonanzkammer durch einen Hohlkörper der Tragstruktur gebildet sein oder in einem solchen Hohlkörper ausgebildet, also als separates oder zusätzliches Bauteil darin angeordnet sein. Mit anderen Worten, hier wird ein in der Tragstruktur ohnehin vorhandener Hohlkörper dazu genutzt, die jeweilige Resonanzkammer zu realisieren. Nutzbare Hohlkörper finden sich in einer Tragstruktur bspw. in hohlen Trägern oder in sonstigen ungenutzten Zwischenräumen.

Für den bevorzugten Fall, dass es sich bei der Tragstruktur um ein Kraftfahrzeug handelt, kann besagter Hohlkörper bspw. durch einen Schweller oder durch eine Säule oder durch einen Träger oder durch einen Kotflügelhohlraum oder durch eine Ersatzradmulde oder dergleichen gebildet sein. Somit lassen sich bislang ungenutzte Hohlräume bzw. Hohlkörper des Fahrzeugs ausnutzen, um die jeweilige Resonanzkammer der Abgasanlage unterzubringen bzw. zu realisieren. Gemäß einer anderen vorteilhaften Ausführungsform kann die jeweilige Resonanzkammer aus Kunststoff hergestellt sein. Zusätzlich oder alternativ kann die jeweilige Verbindungsleitung als Schlauch ausgestaltet sein, und zwar ebenfalls aus Kunststoff. Die Erfindung nutzt hierbei die Erkenntnis, dass eine Resonanzkammer, insbesondere bei einem Helmholz-Resonator, nicht vom heißen Abgas durchströmt ist, sondern mit dem Abgasrohr nur bezüglich der Luftschallübertragung gekoppelt ist. Da nur Luftschall übertragen wird, kommt es im Resonanzvolumen nur zu einer deutlich reduzierten thermischen Belastung. Dementsprechend ist es bei der hier vorgestellten entkoppelten Bauweise möglich, die Resonanzkammer und/oder die Verbindungsleitung aus Kunststoff herzustellen. Bei einem Schalldämpfergehäuse, das in die Abgasanlage eingebunden ist, werden aufgrund der hohen Temperaturen des Abgasrohres üblicherweise metallische Werkstoffe verwendet. Die Kunststoff-Bauweise reduziert Herstellungskosten und Gewicht.

Bei einer anderen Ausführungsform kann jede Resonanzkammer mit der zugehörigen, mindestens einen Verbindungsleitung gezielt zur Dämpfung eines bestimmten Frequenzbands ausgelegt sein. Zweckmäßig sind jedoch mehrere Resonanzkammern vorgesehen, die mit der jeweiligen wenigstens einen Verbindungsleitung gezielt zur Bedämpfung mehrerer verschiedener Frequenzbänder ausgelegt sind, wobei sich diese Frequenzbänder entsprechend einer vorteilhaften Ausführungsform gegenseitig überlappen. Hierdurch kann eine breitbandige Dämpfung innerhalb der Abgasanlage für Luftschall realisiert werden. Die Verbindungsleitung ist aus Kunststoff hergestellt und sie ist über ein thermisch entkoppelndes Anschlusselement an das jeweilige Abgasrohr angeschlossen. Ein derartiges, thermisch entkoppelndes Anschlusselement kann bspw. eine konstruktive Engstelle und/oder einen thermischen Isolator aufweisen, um den Wärmeübergang vom Abgasrohr zur Verbindungsleitung zu reduzieren. Darüber hinaus ist das Anschlusselement gekühlt und/oder mit einer Kühlstruktur ausgestattet. Eine geeignete Kühlstruktur ist bspw. die vorgenannte Engstelle oder zumindest eine Kühlrippe.

Gemäß einer besonders zweckmäßigen Ausführungsform kann zumindest eine solche Verbindungsleitung zum Halten des Abgasrohrs an der Tragstruktur ausgestaltet sein. Mit anderen Worten, die jeweilige Verbindungsleitung übernimmt hier eine Halte- oder Tragfunktion, um das Abgasrohr an der Tragstruktur zu befestigen. Durch die Elastizität bzw. Flexibilität der jeweiligen Verbindungsleitung kann dabei gleichzeitig eine Schwingungsentkopplung zwischen Abgasrohr und Tragstruktur realisiert werden. Besonders vorteilhaft ist dabei eine Ausführungsform, bei welcher das Abgasrohr an der Tragstruktur ausschließlich über mehrere solche Verbindungsleitungen gehalten ist. Das bedeutet, dass das Abgasrohr abgesehen von seiner Befestigung an der Brennkraftmaschine nur noch über derartige Verbindungsleitungen an der Tragstruktur befestigt ist. Durch die Flexibilität der Verbindungsleitungen erfolgt eine schwingungsmäßige Entkopplung des Abgasrohrs von der Tragstruktur, wodurch insbesondere auch eine Übertragung von Körperschall vom Abgasrohr auf die Tragstruktur signifikant reduziert ist.

Entsprechend einer anderen Ausführungsform kann zumindest ein Schaltelement zum Aktivieren und Deaktivieren der schallübertragenden Verbindung zwischen dem jeweiligen Abgasrohr und dem jeweiligen Resonanzvolumen vorgesehen sein. Da die jeweilige Resonanzkammer thermisch weitgehend von der übrigen Abgasanlage entkoppelt ist, lassen sich besonders preiswerte Schaltelemente verwenden, um das jeweilige Resonanzvolumen aktivieren bzw. deaktivieren zu können. Insgesamt kann somit eine schaltbare Schalldämpfung realisiert werden, die abhängig von bestimmten Betriebszuständen der Brennkraftmaschine das Resonanzvolumen zuschaltet oder wegschaltet.

Zusätzlich oder alternativ kann wenigstens eine Stelleinrichtung zum Variieren des Resonanzvolumens der jeweiligen Resonanzkammer und/oder der Länge der jeweiligen Verbindungsleitung vorgesehen sein. Auch diese Ausgestaltung beruht auf der Überlegung, dass die Resonanzkammer thermisch weitgehend vom Abgasrohr entkoppelt ist, so dass hier preiswerte Stelleinrichtungen verwendet werden können, um ein variables Resonanzvolumen bzw. eine variable Verbindungsleitung realisieren zu können. Durch Verändern des Resonanzvolumens bzw. der Länge der Verbindungsleitung kann die Resonanzfrequenz des jeweiligen Schalldämpfers signifikant verändert werden. Insbesondere ist dadurch eine Adaption bzw. Anpassung des jeweiligen Schalldämpfers an unterschiedliche Betriebszustände der Brennkraftmaschine möglich.

Beispielsweise kann eine lastabhängige und/oder drehzahlabhängige Betätigung des jeweiligen Schaltelements bzw. der jeweiligen Stelleinrichtung realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, prinzipielle Seitenansicht einer als Kraftfahrzeug ausgestalteten Tragstruktur mit einer Abgasanlage,
- Fig. 2: eine Draufsicht des Fahrzeugs aus Fig. 1,
- Fig. 3: eine Frontansicht des Fahrzeugs aus Fig. 1,
- Fig. 4: eine stark vereinfachte Prinzipdarstellung eines Schalldämpfers der Abgasanlage.

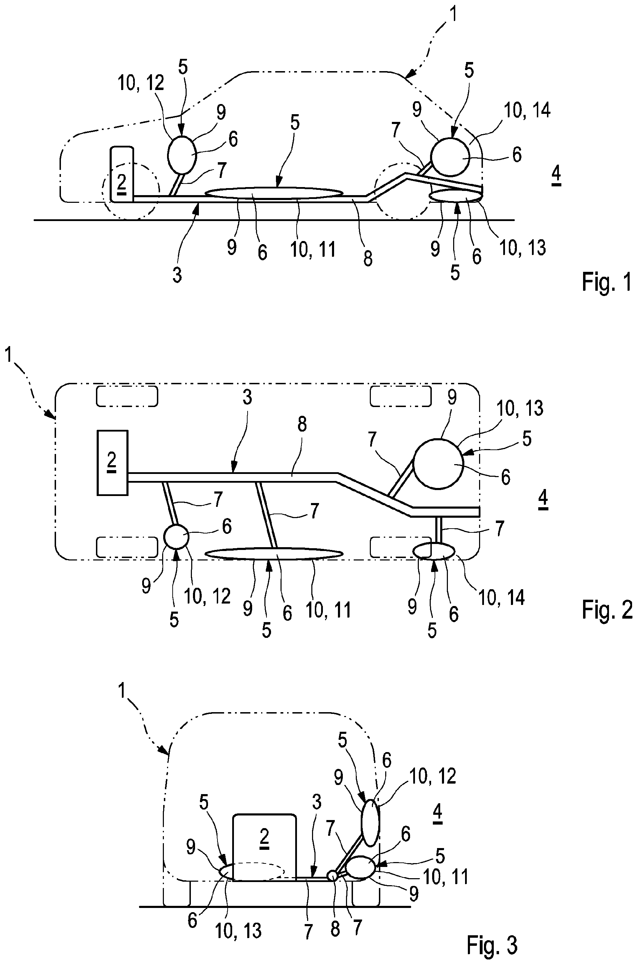

Entsprechend den Fig. 1 bis 3 umfasst eine Tragstruktur 1 eine Brennkraftmaschine 2 und eine Abgasanlage 3 zum Abführen von Abgas der Brennkraftmaschine 2 in eine Umgebung 4 der Tragstruktur 1. Im gezeigten Beispiel handelt es sich bei der Tragstruktur 1 um ein Kraftfahrzeug, das im Folgenden ebenfalls mit 1 bezeichnet werden kann. Alternativ kann es sich bei der Tragstruktur 1 auch um ein stationäres Gestell oder dergleichen handeln, um bspw. eine stationäre Brennkraftmaschine 2 mit Abgasanlage 3 zu tragen.

Die Abgasanlage 3 umfasst zumindest einen Schalldämpfer 5. Im Beispiel sind rein exemplarisch und ohne Beschränkung der Allgemeinheit vier derartige Schalldämpfer 5 dargestellt, die kumulativ oder alternativ oder in beliebiger Kombination realisierbar sind.

Der jeweilige Schalldämpfer 5 weist zumindest ein Resonanzvolumen 6 auf und umfasst zumindest eine Verbindungsleitung 7. Die jeweilige Verbindungsleitung 7 verbindet das jeweilige Resonanzvolumen 6 mit einem Abgasrohr 8 der Abgasanlage 3. Während das Abgasrohr 8 die Abgase von der Brennkraftmaschine 2 zur Umgebung 4 führt, dient die jeweilige Verbindungsleitung 7 lediglich zur Luftschallübertragung zwischen dem Abgasrohr 8 und dem jeweiligen Resonanzvolumen 6. Mit anderen Worten, die jeweilige Verbindungsleitung 7 ist nicht vom heißen Abgas der Abgasanlage 3 durchströmt.

Im gezeigten Beispiel ist bei jedem Schalldämpfer 5 jeweils nur ein einziges Resonanzvolumen 6 vorgesehen, das über nur eine einzige Verbindungsleitung 7 mit dem Abgasrohr 8 gekoppelt ist. Hierdurch bildet der jeweilige Schalldämpfer 5 einen Helmholtz-Resonator, der hinsichtlich seiner Dämpfungswirkung auf ein vergleichsweise enges Frequenzband ausgelegt ist. Durch mehrere Resonanzvolumina 6 je Schalldämpfer 5 und/oder durch mehrere Verbindungsleitungen 7 je Resonanzvolumen 6 kann die Dämpfungswirkung des jeweiligen Schalldämpfers 5 breitbandiger ausgelegt werden. Besonders zweckmäßig ist es nun, die mehreren Schalldämpfer 5 hinsichtlich der Bedämpfung von verschiedenen Frequenzbändern auszulegen, wobei diese Auslegung zielgerichtet so erfolgen kann, dass sich die einzelnen Frequenzbänder gegenseitig überlappen. Insgesamt kann dadurch eine vergleichsweise große Breitbandwirkung für die Bedämpfung des im Abgasrohr 8 transportierten Luftschalls realisiert werden.

Das Resonanzvolumen 6 ist dann dadurch zur Luftschallübertragung an das Abgasrohr 8 angeschlossen, dass die jeweilige Verbindungsleitung 7 einerseits mit der jeweiligen Resonanzkammer 9 und andererseits mit dem Abgasrohr 8 verbunden ist.

Das jeweilige Resonanzvolumen 6 ist nun in einer Resonanzkammer 9 ausgebildet, die in oder an der Tragstruktur 1 fest angeordnet ist. Die Resonanzkammer 9 bildet somit (auch) einen Bestandteil der Tragstruktur 1. Insoweit ist die Abgasanlage 3 zumindest teilweise in die Tragstruktur 1 integriert. Die jeweilige Verbindungsleitung 7 ist flexibel ausgestaltet, derart, dass sie Relativbewegungen zwischen der jeweiligen Resonanzkammer 9 und dem Abgasrohr 8 zulässt. Im Betrieb der Brennkraftmaschine 2, insbesondere bei einem Kraftfahrzeug 1 kann es innerhalb der Abgasanlage 3 zu Schwingungen und sonstigen Relativbewegungen gegenüber dem Fahrzeug 1 kommen. Um dies auch im Bereich des jeweiligen Schalldämpfers 5 zu ermöglichen, ist die jeweilige ortsfest am Fahrzeug 1 angebrachte Resonanzkammer 9 über die flexible Verbindungsleitung 7 vom Abgasrohr 8 schwingungsmäßig bzw. bewegungsmäßig entkoppelt. Dies hat außerdem den Vorteil, dass die Masse der Resonanzkammer 9 nicht über das Abgasrohr 8 am Fahrzeug 1 abgestützt werden muss, sondern ebenfalls vom Abgasrohr 8 entkoppelt ist. Hierdurch vereinfacht sich die Aufhängung des Abgasrohrs 8 an der Tragstruktur 1. Zur Realisierung der gewünschten Flexibilität der Verbindungsleitung 7 kann diese bspw. als Schlauch ausgestaltet sein.

Zweckmäßig ist die jeweilige Resonanzkammer 9 durch einen Hohlkörper 10 der Tragstruktur 1 gebildet, das heißt, der Hohlkörper 10 ist selbst die das Resonanzvolumen 6 umschließende Resonanzkammer 9. Alternativ kann die jeweilige Resonanzkammer 9 in einem solchen Hohlkörper 10 ausgebildet sein. In diesem Fall handelt es sich bei der Resonanzkammer 9 um ein bezüglich des Hohlkörpers 10 separates bzw. zusätzliches Bauteil, das in den Hohlkörper 10 eingesetzt bzw. eingebaut ist.

Sofern es sich wie hier bei der Tragstruktur 1 um ein Kraftfahrzeug 1 handelt, kann es sich beim jeweiligen Hohlkörper 10 bspw. um einen Schweller 11 im Bereich einer Seitentür des Fahrzeugs 1 handeln. Ebenso kann es sich beim Hohlkörper 10 um eine Säule 12, z. Bsp. eine A-Säule, handeln oder um eine Ersatzradmulde 13. Alternativ kann es beim Hohlkörper 10 auch um einen Kotflügelhohlraum 14 handeln oder um einen Längsträger oder um einen Querträger oder um einen sonstigen Träger der Karosserie bzw. des Rohbaus des Fahrzeugs 1.

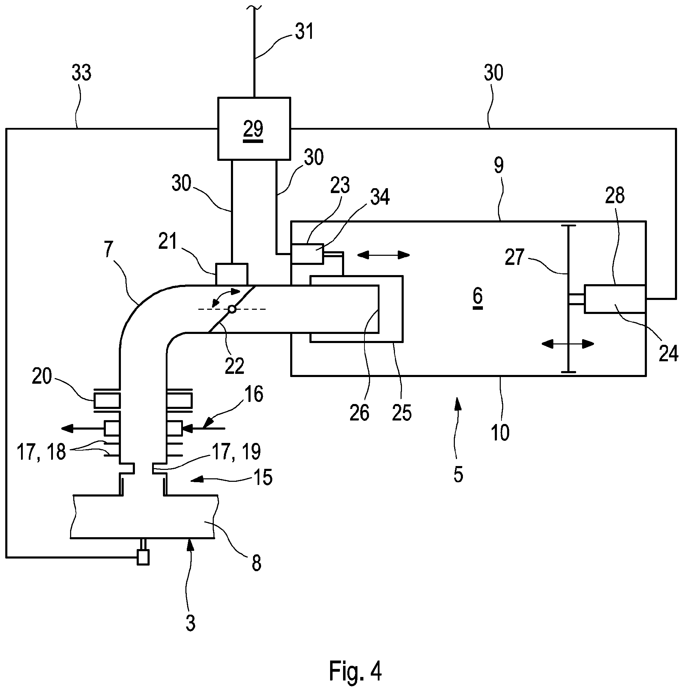

Wir gezeigt ist die jeweilige Verbindungsleitung 7 entweder direkt an der Tragstruktur 1 befestigt, wenn die jeweilige Resonanzkammer 9 durch einen Hohlkörper 10 der Tragstruktur 1 gebildet ist, oder nur indirekt, nämlich über die Resonanzkammer 9, wenn diese bezüglich des in der Tragstruktur 1 ausgebildeten Hohlkörpers 10 ein separates bzw. zusätzliches Bauteil bildet, das in besagten Hohlkörper 10 eingesetzt bzw. eingebaut ist und an der Tragstruktur 1 befestigt ist. Desweiteren ist die jeweilige Verbindungsleitung 7 am Abgasrohr 8 befestigt bzw. mit dem Abgasrohr 8 fest verbunden, wobei hierzu ein Anschlusselement 15 verwendet werden kann, das an anderer Stelle mit Bezug auf Fig. 4 näher erläutert wird. Jedenfalls kann zumindest eine solche Verbindungsleitung 7 so ausgestaltet sein, dass sie für das Abgasrohr 8 eine Tragfunktion bzw. Haltefunktion übernimmt, um das Abgasrohr 8 an der Tragstruktur 1 zu halten. Besonders zweckmäßig ist es, wenn alle Verbindungsleitungen 7 so ausgestaltet sind, dass sie diese Haltefunktion für das Abgasrohr 8 erfüllen können. Insbesondere ist es dann auch möglich, das Abgasrohr 8 an der Tragstruktur 1 ausschließlich über diese Verbindungsleitungen 7 festzulegen, so dass auf andere Befestigungsmittel zum Befestigen des Abgasrohrs 8 an der Tragstruktur 1 verzichtet werden kann. Die eingangsseitige Anbindung des Abgasrohrs 8 an die Brennkraftmaschine 2 repräsentiert dabei keine Befestigung des Abgasrohrs 8 an der Tragstruktur 1, sondern eine Befestigung des Abgasrohrs 8 an der Brennkraftmaschine 2. Durch die Flexibilität der jeweiligen Verbindungsleitung 7 ergibt sich zwischen dem Abgasrohr 8 und der Tragstruktur 1 eine hinsichtlich Schwingungen sowie hinsichtlich Körperschallübertragung entkoppelte Aufhängung, was beispielsweise eine störende Geräuschübertragung auf die Tragstruktur 1 signifikant reduziert.

Die jeweilige Resonanzkammer 9 kann zweckmäßig aus Kunststoff hergestellt sein. Dies ist durch die vorgeschlagene Bauweise, nämlich durch die örtliche Trennung der Resonanzkammer 9 vom Abgasrohr 8 möglich, da das Resonanzvolumen 6 nicht von den heißen Abgasen durchströmt ist. Insbesondere kann auch die Verbindungsleitung 7 aus Kunststoff hergestellt sein. Bevorzugt handelt es sich bei der Verbindungsleitung 7 um einen Kunststoffschlauch.

Gemäß Fig. 4 ist die jeweilige Verbindungsleitung 7 über ein Anschlusselement 15 an das Abgasrohr 8 angeschlossen. Dieses Anschlusselement 15 ist thermisch entkoppelt bzw. erzeugt eine thermische Entkopplung zwischen Abgasrohr 8 und Verbindungsleitung 7. Auf diese Weise ist ein Wärmeübergang vom Abgasrohr 8 auf die Verbindungsleitung 7 signifikant reduziert. Erfindungsgemäss ist das Anschlusselement 15 gekühlt. Hierzu kann es bspw. an einen Kühlkreis 16 angeschlossen sein. Zusätzlich oder alternativ weist das Anschlusselement 15 zumindest eine Kühlstruktur 17 auf, wie z. Bsp. Kühlrippen 18 und/oder eine Querschnittsverengung 19. Darüber hinaus kann das Anschlusselement 15 über eine thermische Isolation 20 mit der Verbindungsleitung 7 verbunden sein. Diese Isolation 20 bildet einen thermisch isolierenden Abschnitt des Anschlusselements 15. Die vorstehend genannten Maßnahmen zur thermischen Entkopplung des Anschlusselements 15 können dabei kumulativ oder alternativ oder in beliebiger Kombination realisiert werden.

Der jeweilige Schalldämpfer 5 kann gemäß Fig. 4 mit zumindest einem Schaltelement 21 ausgestattet sein, mit dessen Hilfe die schallübertragende Verbindung zwischen dem Abgasrohr 8 und dem Resonanzvolumen 6 gesteuert, nämlich insbesondere aktiviert und deaktiviert werden kann. Beispielsweise kann das Schaltelement 21 hierzu ein Schaltglied 22 aufweisen, das im Beispiel als Schmetterlingsklappe ausgestaltet ist und mit dem der durchströmbare Querschnitt der Verbindungsleitung 7 geöffnet und gesperrt werden kann. Gezeigt ist mit durchgezogener Linie eine Sperrstellung des Schaltglieds 22, während eine Offenstellung mit unterbrochener Linie dargestellt ist.

Zusätzlich oder alternativ kann der jeweilige Schalldämpfer 5 mit wenigstens einer Stelleinrichtung 23, 24 ausgestattet sein. Im Beispiel sind zur Veranschaulichung zwei Stelleinrichtungen wiedergegeben, nämlich eine erste Stelleinrichtung 23 und eine zweite Stelleinrichtung 24, die alternativ oder kumulativ realisiert werden können. Die erste Stelleinrichtung 23 dient zum Variieren der Länge der Verbindungsleitung 7. Beispielsweise umfasst die erste Stelleinrichtung 23 hierzu eine Verlängerungshülse 25, die koaxial zu einem Endabschnitt 26 die Verbindungsleitung 7 mit Hilfe eines Aktuators 34 verstellt werden kann. Hierdurch lässt sich die Länge der Verbindungsleitung 7 variieren. Die zweite Stelleinrichtung 24 dient hier zum Variieren des Resonanzvolumens 6. Beispielsweise kann die zweite Stelleinrichtung 24 hierzu eine in der Resonanzkammer 9 angeordnete, darin verstellbare Zwischenwand 27 aufweisen, die mit Hilfe eines Aktuators 28 verstellbar ist. Durch Verstellen der Zwischenwand 27 kann das Volumen der Resonanzkammer 9 und somit das Resonanzvolumen 6 verändert werden. Die Verstellbewegungen des Schaltelements 22, der Hülse 25 und der Zwischenwand 27 sind in Fig. 4 durch Doppelpfeile angedeutet.

Gemäß Fig. 4 kann auch eine Steuereinrichtung 29 vorgesehen sein, die auf geeignete Weise mit dem Schaltelement 21 und/oder mit der jeweiligen Stelleinrichtung 23, 24 verbunden sein kann, bspw. mittels Steuerleitungen 30. Insbesondere kann die Steuereinrichtung 29 über zumindest eine Signalleitung 31 mit einem hier nicht dargestellten Motorsteuergerät der Brennkraftmaschine 2 gekoppelt sein. Die Steuereinrichtung 29 ist zweckmäßig so programmiert bzw. ausgestaltet, dass sie in Abhängigkeit der Last und/oder der Drehzahl der Brennkraftmaschine 2 und/oder in Abhängigkeit der aktuellen Abgastemperatur das jeweilige Schaltelement 21 bzw. die jeweilige Stelleinrichtung 23, 24 betätigt. Beispielsweise kann die Steuereinrichtung 29 so abhängig von Last und/oder Drehzahl und/oder Abgastemperatur das jeweilige Resonanzvolumen 6 aktivieren und deaktivieren bzw. das jeweilige Resonanzvolumen 6 und/oder die Länge der jeweiligen Verbindungsleitung 7 variieren. Zum Erfassen der aktuellen Abgastemperatur kann die Steuereinrichtung 29 insbesondere mit mindestens einem geeigneten bzw. geeignet positionierten Temperatursensor 32 über eine entsprechende Signalleitung 33 gekoppelt sein. Zusätzlich oder alternativ kann die Steuereinrichtung 29 die Abgastemperatur auch vom Motorsteuergerät erhalten, falls ohnehin bereits für einen anderen Zweck ein anderer Temperatursensor vorhanden ist.

## Patentansprüche

1. Abgasanlage einer Brennkraftmaschine (2) in einer Tragstruktur (1), insbesondere in einem Kraftfahrzeug (1),
- mit mindestens einem Abgasrohr (8), das Abgas von der Brennkraftmaschine (2) zur Umgebung (4) der Tragstruktur (1) führt,
- mit mindestens einem Schalldämpfer (5), der mindestens ein Resonanzvolumen (6) und mindestens eine Verbindungsleitung (7) aufweist, über die das jeweilige Resonanzvolumen (6) zur Luftschallübertragung an das jeweilige Abgasrohr (8) angeschlossen ist,
- wobei zumindest ein solches Resonanzvolumen (6) in einer in oder an der Tragstruktur (1) fest angeordneten Resonanzkammer (9) ausgebildet ist,
- wobei die jeweilige Verbindungsleitung (7), mit der die jeweilige Resonanzkammer (9) mit dem jeweiligen Abgasrohr (8) verbunden ist, flexibel ausgestaltet ist und Relativbewegungen zwischen der jeweiligen Resonanzkammer (9) und dem jeweiligen Abgasrohr (8) zulässt,
**dadurch gekennzeichnet,**
- **dass** die jeweilige Verbindungsleitung (7) aus Kunststoff hergestellt ist und über ein thermisch entkoppeltes Anschlusselement (15) an das jeweilige Abgasrohr (8) angeschlossen ist,
- **dass** das Anschlusselement (15) gekühlt ist und/oder eine Kühlstruktur (17) aufweist.

2. Abgasanlage nach Anspruch 1,
**dadurch gekennzeichnet,**
**dass** zumindest eine Resonanzkammer (9) durch einen Hohlkörper (10) der Tragstruktur (1) gebildet ist.

3. Abgasanlage nach Anspruch 1,
**dadurch gekennzeichnet,**
**dass** zumindest eine Resonanzkammer (9) in einem Hohlkörper (10) der Tragstruktur (1) ausgebildet oder angeordnet ist.

4. Abgasanlage nach Anspruch 2 oder 3,
**dadurch gekennzeichnet,**
- **dass** die Tragstruktur ein Kraftfahrzeug (1) ist,
- **dass** der Hohlkörper (10) ein Schweller (11) oder eine Säule (12) oder eine Ersatzradmulde (13) oder ein Kotflügelhohlraum (14) oder ein Träger ist.

5. Abgasanlage nach einem der Ansprüche 1 bis 4,
**dadurch gekennzeichnet,**
**dass** die jeweilige Resonanzkammer (9) aus Kunststoff hergestellt ist.

6. Abgasanlage nach einem der Ansprüche 1 bis 5,
**dadurch gekennzeichnet,**
**dass** die jeweilige Verbindungsleitung (7) als Schlauch ausgestaltet ist.

7. Abgasanlage nach einem der Ansprüche 1 bis 6,
**dadurch gekennzeichnet,**
**dass** mehrere Resonanzkammern (9) mit jeweils wenigstens einer Verbindungsleitung (7) zur Bedämpfung mehrerer, einander überlappender Frequenzbänder ausgelegt sind.

8. Abgasanlage nach einem der vorhergehenden Ansprüche,
**dadurch gekennzeichnet,**
**dass** das Anschlusselement (15) einen thermisch isolierenden Abschnitt (20) aufweist.

9. Abgasanlage nach einem der Ansprüche 1 bis 8,
**dadurch gekennzeichnet,**
**dass** zumindest eine Verbindungsleitung (7) zum Halten des Abgasrohrs (8) an der Tragstruktur (1) ausgestaltet ist.

10. Abgasanlage nach Anspruch 9,
**dadurch gekennzeichnet,**
**dass** das Abgasrohr (8) an der Tragstruktur (1) ausschließlich über mehrere solche Verbindungsleitungen (7) gehalten ist.

11. Abgasanlage nach einem der Ansprüche 1 bis 10,
**dadurch gekennzeichnet,**
**dass** zumindest ein Schaltelement (21) zum Aktivieren und Deaktivieren der schallübertragenden Verbindung zwischen dem jeweiligen Abgasrohr (8) und dem jeweiligen Resonanzvolumen (6) vorgesehen ist.

12. Abgasanlage nach einem der Ansprüche 1 bis 11,
**dadurch gekennzeichnet,**
**dass** zumindest eine Stelleinrichtung (23, 24) zum Variieren des Resonanzvolumens (6) der jeweiligen Resonanzkammer (9) und/oder der Länge der jeweiligen Verbindungsleitung (7) vorgesehen ist.

13. Abgasanlage nach Anspruch 11 oder 12,
**dadurch gekennzeichnet,**
**dass** eine Steuereinrichtung (29) vorgesehen ist, die so ausgestaltet und/oder programmiert ist, dass sie in Abhängigkeit der Last und/oder der Drehzahl der Brennkraftmaschine (2) und/oder der Abgastemperatur das jeweilige Resonanzvolumen (6) aktiviert und deaktiviert und/oder das Resonanzvolumen (6) der jeweiligen Resonanzkammer (9) und/oder die Länge der jeweiligen Verbindungsleitung (7) variiert.

14. Tragstruktur, insbesondere Kraftfahrzeug (1), mit einer Brennkraftmaschine (2) und mit einer Abgasanlage (3) nach einem der Ansprüche 1 bis 13.

## Claims

1. Exhaust system of an internal combustion engine (2) in a support structure (1), in particular in a motor vehicle (1),
having at least one exhaust pipe (8) which conducts exhaust gas from the internal combustion engine (2) to the surroundings (4) of the support structure (1),
having at least one silencer (5) which has at least one resonance volume (6) and at least one connecting line (7) by which the respective resonance volume (6) for air-borne sound transmission is connected to the respective exhaust pipe (8),
wherein at least one such resonance volume (6) is formed in a resonance chamber (9) fixedly arranged in or on the support structure (1),
wherein the respective connecting line (7), with which the respective resonance chamber (9) is connected to the respective exhaust pipe (8), is flexible and permits relative movements between the respective resonance chamber (9) and the respective exhaust pipe (8),
**characterised in that**
the respective connecting line (7) is made from plastics material and is connected by a thermally decoupled connection element (15) to the respective exhaust pipe (8),
the connection element (15) is cooled and/or has a cooling structure (17).

2. Exhaust system according to claim 1,
**characterised in that**
at least one resonance chamber (9) is formed by a hollow body (10) of the support structure (1).

3. Exhaust system according to claim 1,
**characterised in that**
at least one resonance chamber (9) is formed or arranged in a hollow body (10) of the support structure (1).

4. Exhaust system according to claim 2 or 3,
**characterised in that**
the support structure is a motor vehicle (1),
the hollow body (10) is a rocker panel (11) or a column (12) or a spare wheel recess (13) or a wing cavity (14) or a support.

5. Exhaust system according to any one of claims 1 to 4,
**characterised in that**
the respective resonance chamber (9) is made from plastics material.

6. Exhaust system according to any one of claims 1 to 5,
**characterised in that**
the respective connecting line (7) is configured as a hose.

7. Exhaust system according to any one of claims 1 to 6,
**characterised in that**
a plurality of resonance chambers (9) each having at least one connecting line (7) is designed for damping a plurality of frequency bands that overlap each other.

8. Exhaust system according to any one of the preceding claims,
**characterised in that**
the connection element (15) has a thermally insulating section (20).

9. Exhaust system according to any one of claims 1 to 8,
**characterised in that**
at least one connecting line (7) is configured for holding the exhaust pipe (8) on the support structure (1).

10. Exhaust system according to claim 9,
**characterised in that**
the exhaust pipe (8) is held on the support structure (1) solely by a plurality of connecting lines (7) of this kind.

11. Exhaust system according to any one of claims 1 to 10,
**characterised in that**
at least one switching element (21) is provided for activating and deactivating the noise-transferring connection between the respective exhaust pipe (8) and the respective resonance volume (6).

12. Exhaust system according to any one of claims 1 to 11,
**characterised in that**
at least one setting device (23, 24) is provided for varying the resonance volume (6) of the respective resonance chamber (9) and/or the length of the respective connecting line (7).

13. Exhaust system according to claim 11 or 12,
**characterised in that**
a controller (29) is provided which is configured and/or programmed such that it activates and deactivates the respective resonance volume (6) as a function of the load and/or the speed of the internal combustion engine (2) and/or the exhaust gas temperature, and/or varies the resonance volume (6) of the respective resonance chamber (9) and/or the length of the respective connecting line (7).

14. Support structure, in particular motor vehicle (1), having an internal combustion engine (2) and having an exhaust system (3) according to any one of claims 1 to 13.

## Revendications

1. Installation d'échappement d'un moteur à combustion interne (2) dans une structure porteuse (1), en particulier dans un véhicule automobile (1),
- avec au moins un tuyau d'échappement (8) qui mène des gaz d'échappement du moteur à combustion interne (2) vers l'environnement (4) de la structure porteuse (1),
- avec au moins un silencieux (5) qui présente au moins un volume de résonance (6) et au moins une conduite de liaison (7), par le biais de laquelle le volume de résonance (6) respectif est raccordé pour la transmission de son aérien au tuyau d'échappement (8) respectif,
- dans laquelle au moins un volume de résonance (6) de ce genre est réalisé dans une chambre de résonance (9) disposée fixement dans ou au niveau de la structure porteuse (1),
- dans laquelle la conduite de liaison (7) respective avec laquelle la chambre de résonance (9) respective est reliée au tuyau d'échappement (8) respectif, est configurée de manière flexible et permet des mouvements relatifs entre la chambre de résonance (9) respective et le tuyau d'échappement (8) respectif,
**caractérisée en ce que**
- la conduite de liaison (7) respective est fabriquée en matière plastique et est raccordée, par le biais d'un élément de raccordement (15) découplé thermiquement, au tuyau d'échappement (8) respectif,
- l'élément de raccordement (15) est refroidi et/ou présente une structure de refroidissement (17).

2. Installation d'échappement selon la revendication 1,
**caractérisée en ce que**
au moins une chambre de résonance (9) est formée par un corps creux (10) de la structure porteuse (1).

3. Installation d'échappement selon la revendication 1,
**caractérisée en ce que**
au moins une chambre de résonance (9) est réalisée ou disposée dans un corps creux (10) de la structure porteuse (1).

4. Installation d'échappement selon la revendication 2 ou 3,
**caractérisée en ce que**
- la structure porteuse est un véhicule automobile (1),
- le corps creux (10) est un bas de caisse (11) ou une colonne (12) ou une cavité de roue de secours (13) ou un espace creux d'aile (14) ou un support.

5. Installation d'échappement selon l'une quelconque des revendications 1 à 4,
**caractérisée en ce que**
la chambre de résonance (9) respective est fabriquée en matière plastique.

6. Installation d'échappement selon l'une quelconque des revendications 1 à 5,
**caractérisée en ce que**
la conduite de liaison (7) respective est configurée en tant que tuyau.

7. Installation d'échappement selon l'une quelconque des revendications 1 à 6,
**caractérisée en ce que**
plusieurs chambres de résonance (9) sont conçues avec respectivement au moins une conduite de liaison (7) pour l'amortissement de plusieurs bandes de fréquence se recouvrant.

8. Installation d'échappement selon l'une quelconque des revendications précédentes,
**caractérisée en ce que**
l'élément de raccordement (15) présente une section thermo-isolante (20).

9. Installation d'échappement selon l'une quelconque des revendications 1 à 8,
**caractérisée en ce que**
au moins une conduite de liaison (7) est configurée pour le maintien du tuyau d'échappement (8) au niveau de la structure porteuse (1).

10. Installation d'échappement selon la revendication 9,
**caractérisée en ce que**
le tuyau d'échappement (8) est maintenu au niveau de la structure porteuse (1) exclusivement par le biais de plusieurs conduites de liaison (7) de ce genre.

11. Installation d'échappement selon l'une quelconque des revendications 1 à 10,
**caractérisée en ce que**
au moins un élément de commutation (21) est prévu pour l'activation et la désactivation de la liaison de transmission du son entre le tuyau d'échappement (8) respectif et le volume de résonance (6) respectif.

12. Installation d'échappement selon l'une quelconque des revendications 1 à 11,
**caractérisée en ce que**
au moins un dispositif de réglage (23, 24) est prévu pour la variation du volume de résonance (6) de la chambre de résonance (9) respective et/ou de la longueur de la conduite de liaison (7) respective.

13. Installation d'échappement selon la revendication 11 ou 12,
**caractérisée en ce que**
un dispositif de commande (29) est prévu, lequel est configuré et/ou programmé de sorte qu'il active et désactive, en fonction de la charge et/ou de la vitesse de rotation du moteur à combustion interne (2) et/ou de la température de gaz d'échappement, le volume de résonance (6) respectif et/ou varie le volume de résonance (6) de la chambre de résonance (9) respective et/ou la longueur de la conduite de liaison (7) respective.

14. Structure porteuse, en particulier véhicule automobile (1), avec un moteur à combustion interne (2) et avec une installation d'échappement (3) selon l'une quelconque des revendications 1 à 13.
